# EUROPÄISCHE PATENTSCHRIFT

(11) **EP 2 592 460 B1**
(45) Veröffentlichungstag und Bekanntmachung des Hinweises auf die Patenterteilung: **28.10.2020**
(21) Anmeldenummer: 12191476.6
(22) Anmeldetag: 06.11.2012
(51) Int. Cl.: G02B 21/08, G02B 27/32

(54) **Maßstabseinblendung**
Scale display
Effet d'incrustation d'échelle

(30) Priorität: 11.11.2011 DE 102011086178
(43) Veröffentlichungstag der Anmeldung: 15.05.2013
(73) Patentinhaber: ATMOS MedizinTechnik GmbH & Co. KG, 79853 Lenzkirch (DE)
(72) Erfinder: Czaniera, Jürgen, 79848 Bonndorf (DE)
(74) Vertreter: Westphal, Mussgnug & Partner Patentanwälte mbB

(56) Entgegenhaltungen:
- DE-A1- 3 318 011
- DE-A1- 4 133 788
- DE-A1- 10 009 532
- DE-A1- 10 257 237
- DE-A1-102006 027 836
- DE-A1-102007 047 460
- GB-A- 393 528
- US-A1- 2008 069 467

## Beschreibung

Die Erfindung betrifft ein Mikroskop mit den Merkmalen des Oberbegriffs des Patentanspruchs 1.

Allgemein bekannt sind Mikroskope, mit denen Objekte vergrößert betrachtet werden können. Neben der bloßen Betrachtung eines Objekts wird aber oft auch angestrebt, die Größe eines betrachteten Objekts bestimmen zu können.

Insbesondere sind aus der DE 33 18 011 A1, der DE 100 09 532 A1, der DE 41 33 788 A1 und der DE 10 2007 047 460 A1 Mikroskope bekannt, bei denen Skalen, Gitter oder Siemens-Sterne im Lichtweg angeordnet sind.

Aus dem Stand der Technik ist es bekannt, hierzu das Mikroskop mit einer Skala auszustatten, die in die Zwischenbildebene vor der Okularoptik eingebracht wird. Dies führt dazu, dass das Auge des Betrachters eine scharf und kontrastreich wahrnehmbare Skala erkennt, auf der die Größe des Objekts ablesbar ist. Diese Anordnung weist aber eine Reihe von gravierenden Nachteilen auf.

Erstens ist bei dieser Anordnung die Größe der Skala stets vorgegeben, während moderne Mikroskope in der Regel einen Vergrößerungswechsler aufweisen, mit dem die Vergrößerung des abgebildeten Objekts gewählt werden kann. Die Skala stimmt also in der Regel nur für eine gegebene Vergrößerung, so dass der abgelesene Wert für alle anderen Vergrößerungen umgerechnet werden muss.

Zweitens ist es nachteilig, dass jede einzelne Okularoptik mit einer derartigen Skala ausgestattet werden muss. Dies schlägt sich auch darin nieder, dass die nach dem Stand der Technik angeordnete Skala nicht von einer an das Mikroskop über einen Strahlteiler angeschlossene Kamera erfasst wird, also in einer Bilddokumentation der Untersuchung nicht auftaucht.

Drittens bringt die bekannte Lösung insbesondere dann gravierende Probleme mit sich, wenn das Mikroskop zur Beobachtung eines Objekts angewendet wird, dessen Position nicht statisch und exakt reproduzierbar ist, wie es insbesondere bei der Anwendung als Operationsmikroskop der Fall ist. Das besondere Problem bei dieser Anwendung erwächst aus der Tatsache, dass eine exakt reproduzierbare, konstante Position des beobachteten Objekts bei einer Beobachtung an einem Patienten meist nicht erreicht werden kann, sondern eine Wanderung des "Objekts" (also des Patienten) aus dem Schärfebereich der Abbildung auftreten kann. Weil die Skala in der Zwischenbildebene angeordnet ist, bleibt sie scharf und erkennbar und verleitet dazu, weiterhin eine Größenbestimmung zu versuchen, die, wenn sie bei einer veränderten Objektposition erfolgt, aber nicht mehr das richtige Ergebnis liefert. Soll beispielsweise die Größenentwicklung eines Tumors auf diese Weise dokumentiert werden, können derartige Fehlmessungen zu folgenreichen falschen Schlussfolgerungen führen.

Die Aufgabe der Erfindung besteht daher darin, ein Mikroskop mit einer Skala bereitzustellen, das die Häufigkeit derartiger Fehlmessungen reduziert, unabhängig von der gewählten Vergrößerung ohne Umrechnung anwendbar ist und zudem nur eine Skala für alle Okular- oder Kameraoptiken aufweisen muss.

Diese Aufgabe wird gelöst durch ein Mikroskop mit den Merkmalen des Patentanspruchs 1. Vorteilhafte Ausgestaltungen der Erfindung sind Gegenstand der Unteransprüche.

Das erfindungsgemäße Mikroskop umfasst eine Beobachtungsoptik, die mindestens eine Okularoptik aufweist und eine Beleuchtungsoptik zur Beleuchtung eines zu beobachtenden Objekts, die mindestens eine Lichtquelle, eine Kollektoroptik und ein Umlenkmittel aufweist. Ferner weist es eine gemeinsame Objektivoptik für Beobachtungsoptik und Beleuchtungsoptik auf.

Eine "Optik" im Sinne dieser Patentschrift ist eine Kombination von in einem bestimmten Abstand voneinander angeordneten optischen Bauelementen, mit der -gegebenenfalls unter Einbeziehung von bzw. im Zusammenwirken mit weiteren optischen Elementen oder anderen Optiken- eine bestimmte Funktion, jeweils dem Wort "Optik" vorangestellte Funktion erfüllt wird. Damit soll der Tatsache Rechnung getragen werden, dass in der heutigen Optik typischerweise Funktionen durch Kombinationen optischer Bauelemente ermöglicht werden. Beispielsweise handelt es sich bei Okularen von Mikroskopen typischerweise um Linsenkombinationen.

Erfindungswesentlich ist, dass die Beleuchtungsoptik eine Skala aufweist, die durch Beleuchtung mit von der Lichtquelle ausgesandtem Licht über die gemeinsame Objektivoptik auf ein zu beobachtendes Objekt projizierbar ist.

Der Erfindung liegt die Erkenntnis zu Grunde, dass eine in der Beleuchtungsoptik angeordnete Skala, die auf das zu beobachtende Objekt, d.h. insbesondere in die scharf abgebildete Ebene des Objekts, projizierbar ist, sicher stellt, dass die Skala zu einem Bestandteil des durch die Beobachtungsoptik abgebildeten Bildes wird. Dementsprechend wird einerseits die Skala mit bei einer Änderung der gewählten Vergrößerung des Mikroskops vergrößert und andererseits sichergestellt, dass die Skala vom menschlichen Betrachter durch die Okularoptik oder die Okularoptiken ebenso wahrgenommen wird wie von einer über einen Strahlteiler am Mikroskop angebrachten Mikroskopkamera. Zudem beugt eine in der Beleuchtungsoptik angeordnete Skala, die über die Objektivoptik, die auch bei der Betrachtung des beobachteten Objekts mittels der Beobachtungsoptik verwendet wird, auf dieses Objekt projiziert wird, Fehlmessungen, die durch eine Wanderung des Objekts aus dem Schärfebereich hervorgerufen werden, effektiv vor, weil sie in einem solchen Fall schnell verschwindet und nicht mehr sichtbar ist. Die Sichtbarkeit der Skala ist somit ein sicherer Indikator dafür, dass das beobachtete Objekt im Schärfebereich liegt. Der Grund dafür ist, dass beim erfindungsgemäßen Mikroskop in dieser Situation nicht nur im Gegensatz zu den aus dem Stand der Technik bekannten Anordnungen das Bild der Skala gemeinsam mit dem Bild des Objekts unscharf wird, sondern zusätzlich bereits die Projektion der Skala über die Objektivoptik auf das Objekt eine Unschärfe aufweist. Dieser multiplikative Effekt führt dazu, dass die Skala sehr schnell, insbesondere schneller als das beobachtete Objekt unscharf wird, wenn das Objekt den Schärfebereich verlässt.

Eine besonders vorteilhafte Ausführungsform eines derartigen Mikroskops sieht vor, dass die Skala in der Ebene der Feldblende angeordnet ist, d.h. in der Ebene, in der Fachmann eine Feldblende anordnen würde, wenn sie in der Beleuchtungsoptik vorgesehen wäre (was zweckmäßig, aber nicht zwingend erforderlich ist). Auf diese Weise wird eine besonders deutliche Abbildung bzw. Projektion der Skala auf das Objekt erreicht.

Die Ebene der Beleuchtungsoptik, in der der Fachmann eine Feldblende anordnen würde (die vorzugsweise, aber nicht zwingend Bestandteil der Beleuchtungsoptik ist), ist die Ebene, an der bei einer gegebenen Beleuchtungsoptik der Rand einer Feldblende im Bild scharf erscheint. Die Lage der Ebene, in der die Skala innerhalb der Beleuchtungsoptik vorzugsweise angeordnet werden sollte, kann somit an einem gegebenen optischen System nötigenfalls einfach durch Überprüfen der Qualität der Abbildung einer Feldblende als Funktion ihrer Position im Beleuchtungssystem bestimmt werden.

Dies ist der Sachverhalt, der mit der Formulierung, dass die Skala in der Ebene der Feldblende liegt, umschrieben wird. Bei der praktischen Ausführung des Mikroskops ist es allerdings oftmals nicht praktikabel, tatsächlich eine Feldblende und eine Skala an derselben Stelle anzuordnen. Die bevorzugte Lösung für dieses Problem besteht dann darin, die Skala an der optimalen Stelle im Lichtweg anzuordnen und die Feldblende unmittelbar benachbart dazu zu positionieren. Unmittelbar benachbart heißt dabei so nah wie möglich unter Vermeidung mechanischer Behinderung der jeweiligen Bauteile beziehungsweise von deren Halterung. So sollte beispielsweise eine schwenkbar ausgeführte Skala bei der Schwenkbewegung nicht an der Feldblende kratzen. Typischerweise ist dafür eine Verschiebung der Feldblende um etwa 0,1 bis etwa 1mm von dem Punkt, an dem sie idealerweise anzuordnen wäre, ausreichend, und zwar vorzugsweise in Richtung der LED. Eine um eine derartige Entfernung relativ zur Skala verschobene Feldblende ist daher noch als unmittelbar benachbart zu dieser anzusehen.

Eine andere, unabhängig erfinderische Ausgestaltung des Mikroskops sieht vor, dass das Mikroskop außer den Merkmalen des Oberbegriffs des Anspruchs 1 zumindest eine zweite Beleuchtungsoptik mit einer zweiten Lichtquelle, einer Kollektoroptik und mindestens einem Umlenkmittel aufweist, wobei die zweite Beleuchtungsoptik an der gemeinsamen Objektivoptik Licht mit einer anderen Wellenlängenverteilung und/oder einer anderen Polarisation bereitstellt als die erste Beleuchtungsoptik. Durch das Vorsehen einer derartigen zweiten Beleuchtungsoptik wird es möglich, das Objekt ohne seine Position zu verändern abwechselnd oder gleichzeitig mit unterschiedlichen Arten von Licht zu beleuchten. Fügt man eine optionale Möglichkeit zur Regelung der durch die einzelnen Beleuchtungsoptiken bereitgestellten Lichtintensität hinzu, beispielsweise durch variable Stromversorgung der Lichtquellen oder variable Blenden oder Absorptionsfilter, kann sogar eine Variation der Anteile der jeweiligen Lichtsorten erreicht werden.

Natürlich lassen sich diese Vorteile auch erreichen, wenn mindestens eine Beleuchtungsoptik eine Skala aufweist, die durch Beleuchtung mit von der Lichtquelle ausgesandtem Licht über die gemeinsame Objektivoptik auf ein zu beobachtendes Objekt projizierbar ist.

Technisch kann die Änderung der Wellenlängenverteilung und/oder der Polarisationsrichtung entweder durch Anordnen eines Wellenlängen- und/oder Polarisationsfilters oder durch Wahl einer entsprechenden Lichtquelle erzielt werden. Im Fall einer Wellenlängenselektion ist es insbesondere wenn die Lichtquelle weißes Licht emittiert besonders günstig, die Umlenkmittel so auszugestalten, dass sie nur den gewünschten Wellenlängenbereich reflektieren und Licht mit einer anderen Wellenlänge aus dem Lichtweg entweichen lassen. Dies ist beispielsweise erreichbar, indem man als Umlenkmittel dichroitische Filter verwendet. Dies führt zu einer mehrfachen Wellenlängenselektion auf dem Lichtweg, was die andernfalls hohen Anforderungen an einen Wellenlängenfilter spürbar reduziert und zu einem sehr kostengünstigen Gesamtsystem führt.

Besonders vorteilhaft für die Erkennbarkeit der Skala ist es unabhängig davon, ob eine oder zwei Beleuchtungsoptiken vorgesehen sind, , wenn in der ersten Beleuchtungsoptik und/oder in der etwaig vorhandenen zweiten Beleuchtungsoptik die Kollektoroptiken die Lichtquellen in etwa in die Ebene einer Hilfslinse abbilden und wenn die Hilfslinse die Ebene, in der das Licht der jeweiligen Lichtquelle am homogensten ist, nach unendlich abbildet, so dass zwischen Hilfslinsen und der gemeinsamen Objektivoptik Kollimation herrscht. Das Objektiv sorgt dann für die Abbildung in die Objektebene. Da sowohl für die Beleuchtungsoptik als auch für die Beobachtungsoptik paralleler Strahlengang beim gemeinsamen Objektiv vorliegen, ist für beide die Schärfeebene die Brennebene des Objektivs.

Wegen ihres einfachen Aufbaus besonders bevorzugt ist die Gestaltung der Skala als Strichplatte, also als Platte aus einem durchsichtigen Material mit darauf in regelmäßigem Abstand angeordneten undurchsichtigen Markierungen in Form von Strichen.

Als zweckmäßig hat sich weiter erwiesen, wenn dass die Skala (113,213) so schwenkbar im Lichtweg angeordnet ist, dass sie in diesen hinein- und aus ihm heraus geschwenkt werden kann.

Besonders kompakte Beleuchtungsoptiken, die eine hohe Lichtintensität bereitstellen können erhält man, wenn die Lichtquelle der ersten Beleuchtungsoptik und/oder die zweite Lichtquelle eine LED aufweist.

Exemplarische Ausführungsbeispiele der Erfindung werden nachfolgend anhand von Figuren näher erläutert. Es zeigen:
- Fig.1:: Eine schematische Darstellung eines ersten Ausführungsbeispiels eines Mikroskops, und
- Fig.2:: eine schematische Darstellung eines zweiten Ausführungsbeispiels eines Mikroskops.

Die Darstellungen sind insoweit schematisch, als lediglich einzelne Funktionsbaugruppen oder Optiken abgebildet sind, die gegebenenfalls eine Unterstruktur haben oder aus mehreren Komponenten zusammengesetzt sind. Ferner entsprechen die durch gepunktete Linien in den Figuren angedeuteten Verläufe von Lichtstrahlen nicht der (physikalischen) Realität, sondern wurden so dargestellt, dass sie die resultierenden Beleuchtungs- bzw. Abbildungsverhältnisse anschaulich wiedergeben.

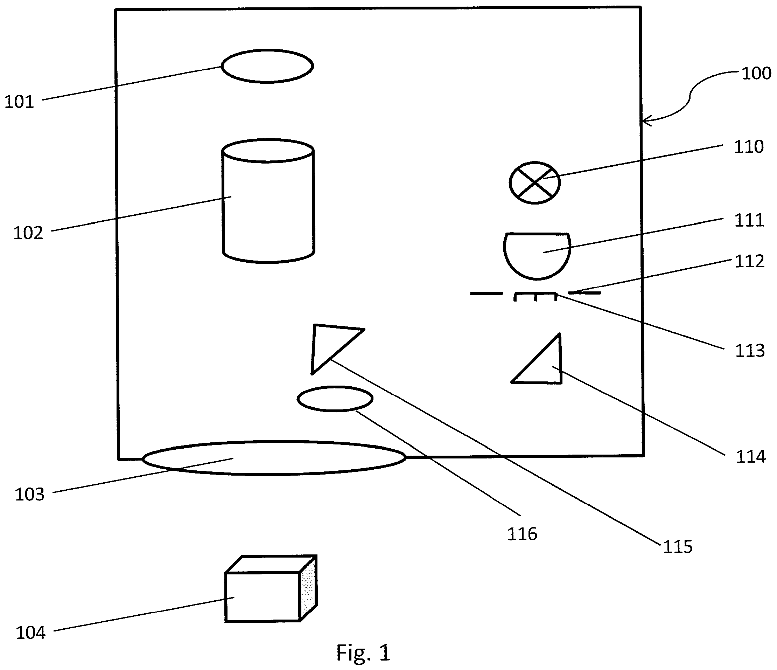

Figur 1 zeigt ein Ausführungsbeispiel eines Mikroskops 100. Das Mikroskop 100 weist als Beobachtungsoptik eine Okularoptik 101 und einen Vergrößerungswechsler 102 auf, mit dem stufenweise die Vergrößerung, mit der das Mikroskop 100 einen zu betrachtenden Gegenstand 104 abbildet, variiert werden kann. Ferner ist eine Objektivoptik 103 Bestandteil der Beobachtungsoptik.

Außerdem weist das Mikroskop 100 eine Beleuchtungsoptik zur Beleuchtung des zu betrachtenden Gegenstands 104 auf, zu der die Objektivoptik 103 ebenfalls gehört. Mit anderen Worten gesagt ist die Objektivoptik 103 also eine gemeinsame Objektivoptik für Beobachtungsoptik und Beleuchtungsoptik.

Die Beleuchtungsoptik umfasst ferner eine Lichtquelle 110, deren Licht mit einer Kollektoroptik 111 konzentriert und nach Durchtritt durch eine Feldblende 112 über Umlenkmittel 114,115, die beispielsweise als Spiegel oder Prismen ausgeführt sein können, über eine Hilfslinse 116 so auf die Objektivoptik 103 gelenkt wird, dass der zu betrachtende Gegenstand 104 beleuchtet wird.

Wesentlich bei diesem Ausführungsbeispiel der Erfindung ist, dass in der Ebene, in der die Feldblende 112 angeordnet ist, auch eine Skala 113 liegt, die durch die durch die Kollektoroptik 111 parallelisierten Lichtstrahlen über die Objektivoptik 103 auf den zu betrachtenden Gegenstand 104 projiziert wird.

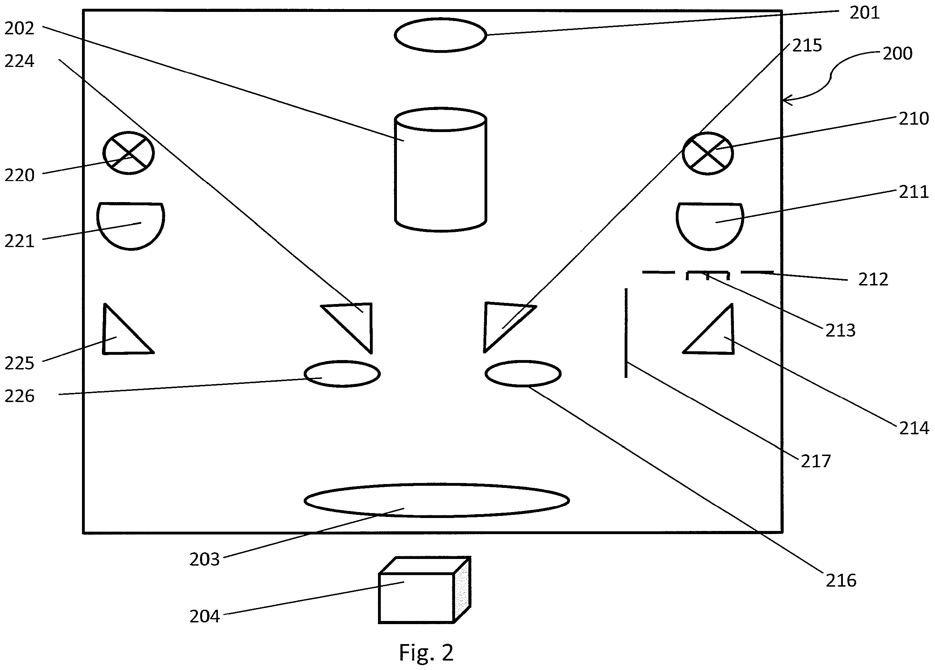

Im in Figur 2 dargestellten zweiten Ausführungsbeispiel eines Mikroskops 200 ist die Beobachtungsoptik mit Okularoptik 201, Vergrößerungswechsler 202 und Objektivoptik 203 identisch zu der in Figur 1 dargestellten Ausführungsform. Der wesentliche Unterschied zwischen den beiden Ausführungsformen besteht darin, dass bei der Ausführungsform nach Figur 2 eine verdoppelte Beleuchtungsoptik vorliegt.

Zu den Beleuchtungsoptiken gehören jeweils Lichtquellen 210,220, deren Lichtstrahlen durch Kollektoroptiken 211,221 konzentriert werden und über Umlenkmittel 214,215 bzw. 224,225 auf Hilfslinsen 216, 226 gelenkt werden. Da im Strahlengang der ersten Beleuchtungsoptik ein Wellenlängenfilter 217 angeordnet ist, stellt die zweite Beleuchtungsoptik an der gemeinsamen Objektivoptik 103 Licht mit einer anderen Wellenlängenverteilung bereitstellt als die erste Beleuchtungsoptik, derselbe Effekt kann auch ohne Filterung durch den Wellenlängenfilter 217 erreicht werden, wenn Lichtquellen 210,220, die eine unterschiedliche Wellenlängenverteilung aufweisen, verwendet werden. Ferner weist der Strahlengang der ersten Beleuchtungsoptik auch eine Feldblende 212 auf.

In beiden dargestellten Ausführungsformen bilden die Kollektoroptiken (111,211,221) die Lichtquellen (210,220) in etwa in die Ebene der jeweiligen Hilfslinse (116,216,226) ab. Die Hilfslinsen 116,216,226 dienen bevorzugt dazu, die Ebene, in der das Licht der jeweiligen Lichtquelle (210,220) am homogensten ist, nach unendlich abzubilden, so dass zwischen Hilfslinsen (116,216,226) und der gemeinsamen Objektivoptik (103,203) Kollimation herrscht.
Insbesondere ist es für beide Ausführungsformen zweckmäßig, wenn das gemeinsame Frontobjektiv das Objekt nach unendlich abbildet und daher ein etwaig vorgesehener Vergrößerungswechsler afokal ist. Um ein reelles Zwischenbild für das Okular zu erzeugen, kann dann vor dem Okular jeweils noch eine Tubuslinse vorgesehen werden. Bei dieser Ausgestaltung sorgt die Hilfslinse in der jeweiligen Beleuchtungsoptik für einen parallelen Strahlengang des Lichtes, wenn es durch die Hilfslinse hindurchgetreten ist und bildet den Maßstab nach Unendlich ab. Das gemeinsame Frontobjektiv stellt dann sicher, dass die Abbildung in die Objektebene erfolgt.

### Bezugszeichenliste

- 100,200: Mikroskop
- 101,201: Okularoptik
- 102,202: Vergrößerungswechsler
- 103,203: gemeinsame Objektivoptik
- 104,204: zu beobachtender Gegenstand
- 110,210,220: Lichtquelle
- 111,211,221: Kollektoroptik
- 112,212: Feldblende
- 113,213: Skala
- 114,115,214,215,224,225: Umlenkmittel
- 116,216,226: Hilfslinsen
- 217: Wellenlängenfilter

## Patentansprüche

1. Mikroskop (100,200) mit einer Beobachtungsoptik, die mindestens eine Okularoptik (101,201) aufweist, mit einer Beleuchtungsoptik, die mindestens eine Lichtquelle (110,210), eine Kollektoroptik (111,211) und ein Umlenkmittel (114,214,115,215) aufweist, und mit einer gemeinsamen Objektivoptik (103,203) für Beobachtungsoptik und Beleuchtungsoptik,
**dadurch gekennzeichnet, dass** die Beleuchtungsoptik eine Skala (113,213) aufweist, die durch Beleuchtung mit von der Lichtquelle (110,210) ausgesandtem Licht über die gemeinsame Objektivoptik (103,203) auf ein zu beobachtendes Objekt (104,204) projiziert wird, so dass die Skala zu einem Bestandteil des durch die Beobachtungsoptik abgebildeten Bildes wird und dementsprechend einerseits die Skala mit bei einer Änderung der gewählten Vergrößerung des Mikroskops vergrößert wird und andererseits sichergestellt wird, dass die Skala vom menschlichen Betrachter zur Grössenbestimmung durch die Okularoptik oder die Okularoptiken ebenso wahrgenommen wird wie von einer über einen Strahlteiler am Mikroskop angebrachten Mikroskopkamera, indem die Skala (113,213) in der Ebene der Beleuchtungsoptik angeordnet ist, in der eine Feldblende (112,212) durch die Beleuchtungsoptik scharf abgebildet würde.

2. Mikroskop (100,200) nach Anspruch 1,
**dadurch gekennzeichnet, dass** in der Beleuchtungsoptik eine Feldblende (112,212) vorgesehen ist und dass die Feldblende (112,221) in derselben Ebene wie die Skala (113,213) oder unmittelbar benachbart zur Skala (113,213) angeordnet ist.

3. Mikroskop (100,200) nach einem der vorstehenden Ansprüche,
**dadurch gekennzeichnet, dass** das Mikroskop (100,200) eine zweite Beleuchtungsoptik mit einer zweiten Lichtquelle (220), einer Kollektoroptik (221) und einem Umlenkmittel (224,225) aufweist, wobei die zweite Beleuchtungsoptik an der gemeinsamen Objektivoptik (203) Licht mit einer anderen Wellenlängenverteilung und/oder einer anderen Polarisation bereitstellt als die erste Beleuchtungsoptik.

4. Mikroskop (100,200) nach Anspruch 3,
**dadurch gekennzeichnet, dass** die erste Beleuchtungsoptik und/oder die zweite Beleuchtungsoptik einen Wellenlängenfilter (217) und/oder einen Polarisationsfilter aufweist.

5. Mikroskop (100,200) nach Anspruch 3,
**dadurch gekennzeichnet, dass** die zweite Lichtquelle (220) Licht einer anderen Wellenlängenverteilung bereitstellt als die Lichtquelle (210) der ersten Beleuchtungsoptik.

6. Mikroskop (100,200) nach einem der vorstehenden Ansprüche,
**dadurch gekennzeichnet, dass** die erste Beleuchtungsoptik und/oder die zweite Beleuchtungsoptik eine Hilfslinse (116,216,226) aufweisen, die so positioniert und ausgewählt ist, dass die Kollektoroptiken (111,211,221) die Lichtquellen (110,210,220) in die Ebene der jeweiligen Hilfslinse (116,216,226) abbilden und dass die Hilfslinse (116,216, 226) die Ebene, in der das Licht der jeweiligen Lichtquelle (111,211,221) am homogensten ist, nach unendlich abbildet, so dass zwischen Hilfslinsen (116,216,226) und der gemeinsamen Objektivoptik (103,203) Kollimation herrscht.

7. Mikroskop (100,200) nach einem vorstehenden Anspruch,
**dadurch gekennzeichnet, dass** die Skala (113,213) als Strichplatte realisiert ist.

8. Mikroskop (100,200) nach einem vorstehenden Anspruch,
**dadurch gekennzeichnet, dass** die Skala (113,213) so schwenkbar im Lichtweg angeordnet ist, dass sie in diesen hinein- und aus ihm herausgeschwenkt werden kann.

9. Mikroskop (100,200) nach einem vorstehenden Anspruch,
**dadurch gekennzeichnet, dass** die Lichtquelle (110,210) der ersten Beleuchtungsoptik und/oder die zweite Lichtquelle (220) eine LED aufweist.

## Claims

1. Microscope (100, 200) with an observation optic system that comprises at least one ocular optic system (101, 201) with an illumination optic system comprising at least one light source (110, 210), a collector optic system (111, 211) and a deflection means (114, 214, 115, 215) and with a shared lens optic system (103, 203) for observation optic system and illumination optic system,
**characterized in that** the illumination optic system comprises a scale (113, 213) that is projected onto the observed object (104, 204) by means of illumination with light emitted by the light source (110, 210) through the shared lens optic system (103, 203) such that the scale becomes an integral part of the image viewed through the observation optic system and, on the one hand, the scale is correspondingly enlarged by changing the magnification of the microscope and, on the other hand, it is ensured that the scale is perceived by a human observer, for the purpose of determining size, through the ocular optic system or the ocular optic systems in the same way as a microscope camera attached to the microscope via a beam splitter **in that** the scale (113, 213) is disposed in the plane of the illumination optic system in which a field diaphragm (112, 212) is shown in focus by the illumination optic system.

2. Microscope (100, 200) in accordance with claim 1,
**characterized in that** a field diaphragm (112, 212) is provided in the illumination optic system and that the field diaphragm (112, 212) is disposed in the same plane as the scale (113, 213) or is directly adjacent to the scale (113, 213).

3. Microscope (100, 200) in accordance with any of the preceding claims,
**characterized in that** the microscope (100, 200) comprises a second illumination optic system with a second light source (220), a collector optic system (221) and a deflection means (224, 225), wherein the second illumination optic system on the shared lens optic system (203) provides light with a different wave length distribution and/or a different polarization than the first illumination optic system.

4. Microscope (100, 200) in accordance with claim 3,
**characterized in that** the first illumination optic system and/or the second illumination optic system comprises a wave length filter (217) or a polarization filter.

5. Microscope (100, 200) in accordance with claim 3,
**characterized in that** the second light source (220) provides light with a different wave length distribution than the light source (210) of the first illumination optic system.

6. Microscope (100, 200) in accordance with any of the preceding claims,
**characterized in that** the first illumination optic system and/or the second illumination optic system comprises an auxiliary lens (116, 216, 226) that is selected and proportioned such that the collector optic systems (111, 211, 221) images the light sources (110, 210, 220) in the plane of the respective auxiliary lens (116, 216, 226) and that the auxiliary lens (116, 216, 226) images the plane in which the respective light source (111, 211, 221) is the most homogenous to infinity such that collimation occurs between auxiliary lens (116, 216, 226) and the shared lens optic system (103, 203).

7. Microscope (100, 200) in accordance with any of the preceding claims,
**characterized in that** the scale (113, 213) is realized as a reticule.

8. Microscope (100, 200) in accordance with any of the preceding claims,
**characterized in that** the scale (113, 213) is pivotably disposed in the light path such that it can be pivoted into and out of it.

9. Microscope (100, 200) in accordance with any of the preceding claims,
**characterized in that** the light source (110, 210) of the first illumination optic system and/or the second light source (220) comprises an LED.

## Revendications

1. Microscope (100, 200) comportant une optique d'observation ayant au moins une optique d'oculaire (101, 201), une optique d'éclairage avec au moins une source lumineuse (110, 210), une optique de collecteur (111, 211) et un moyen de renvoi (114, 214, 115, 215) ainsi qu'une optique d'objectif commune (103, 203) pour l'optique d'observation et l'optique d'éclairage,
microscope **caractérisé en ce que**
l'optique d'éclairage a une échelle (113, 213) qui est projetée par l'éclairage avec la lumière émise par une source lumineuse (110, 210) et l'optique d'objectif commune (103, 203) sur un objet à observer (104, 204) de façon que l'échelle fasse partie de l'image formée par l'optique d'observation et qu'ainsi d'une part l'échelle est agrandie lorsqu'on modifie l'agrandissement choisi pour le microscope et d'autre part cela garantit que l'échelle soit perçue par l'observateur pour déterminer la dimension à travers l'optique d'oculaire ou les optiques d'oculaire pour être perçue comme une caméra de microscope installée par un diviseur de faisceau sur le microscope **en ce que** l'échelle (113, 213) se trouve dans le plan de l'optique d'éclairage dans lequel est formée l'image nette d'un diaphragme de champ (112, 212) par l'optique d'éclairage.

2. Microscope (100, 200) selon la revendication 1,
**caractérisé en ce qu'**
un diaphragme de champ (112, 212) est prévu dans l'optique d'éclairage et ce diaphragme de champ (112, 212) se trouve dans le même plan que l'échelle (113, 213) ou directement au voisinage de l'échelle (113, 213).

3. Microscope (100, 200) selon l'une des revendications précédentes,
**caractérisé en ce qu'**il (100, 200) comporte :
une seconde optique d'éclairage avec une seconde source lumineuse (220), une optique de collecteur (221) et un moyen de renvoi (224, 225),
* la seconde optique d'éclairage fournissant à l'optique d'objectif commune (203), la lumière avec une autre répartition des longueurs d'onde et/ou une autre polarisation que la première optique d'éclairage.

4. Microscope (100, 200) selon la revendication 3,
**caractérisé en ce que**
la première optique d'éclairage et/ou la seconde optique d'éclairage comportent un filtre de longueur d'onde (217) et/ou un filtre polarisant.

5. Microscope (100, 200) selon la revendication 3,
**caractérisé en ce que**
la seconde source lumineuse (220) fournit une lumière avec une autre répartition des longueurs d'ondes que la source lumineuse (210) de la première optique d'éclairage.

6. Microscope (100, 200) selon l'une quelconque des revendications précédentes,
**caractérisé en ce que**
la première optique d'éclairage et/ou la seconde optique d'éclairage ont une lentille auxiliaire (116, 216, 226) positionnée et sélectionnée pour que les optiques de collecteur (111, 211, 221) forment l'image des sources lumineuses (110, 210, 220) dans le plan de la lentille auxiliaire (116, 216, 226) respective, et que
la lentille auxiliaire (116, 216, 226) rejette vers l'infini le plan dans lequel la lumière de la source lumineuse (111, 211, 221) respective est la plus homogène pour avoir la collimation entre les lentilles auxiliaires (116, 216, 226) et l'optique d'objectif commune (103, 203).

7. Microscope (100, 200) selon l'une des revendications précédentes,
**caractérisé en ce que**
l'échelle (113, 213) est un réticule.

8. Microscope (100, 200) selon l'une des revendications précédentes,
**caractérisé en ce que**
l'échelle (113, 213) est disposée pivotante dans le chemin lumineux de façon qu'elle puisse être engagée dans celui-ci ou dégagée de celui-ci.

9. Microscope (100, 200) selon l'une des revendications précédentes,
**caractérisé en ce que**
la source lumineuse (110, 210) de la première optique d'éclairage et/ou de la seconde source lumineuse (220) comporte une diode LED.
